(19) Europäisches Patentamt
European Patent Office
Office européen des brevets

(11) **EP 2 813 870 B1**

(12) **EUROPEAN PATENT SPECIFICATION**

(45) Date of publication and mention
of the grant of the patent:
**28.03.2018   Bulletin 2018/13**

(51) Int Cl.:
***G01W 1/14*** *(2006.01)*

(21) Application number: **14466013.1**

(22) Date of filing: **10.06.2014**

(54) **System for determination of the snow water equivalent (SWE) of a snow layer**

System zur Ermittlung des Schneewasseräquivalents (SWE) einer Schneeschicht

Système de détermination de l'équivalent en eau en neige (EEN) d'une couche de neige

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.06.2013   CZ 20130444**

(43) Date of publication of application:
**17.12.2014   Bulletin 2014/51**

(73) Proprietor: **Ceská Zemedelská Univerzita V Praze
165 21 Praha 6 Suchdol (CZ)**

(72) Inventors:
• **Klose, Zbynek
38501 Vimperk (CZ)**
• **Stanek, Ondrej
16900 Praha 6 (CZ)**
• **Pavlásek, Jirí
34021 Strázov (CZ)**
• **Pech, Pavel
18009 Praha 8 - Cimice (CZ)**

(74) Representative: **Korejzová, Petra
Korejzová Legal v.o.s
Korunni 810/104 E
101 00 Prague 10 (CZ)**

(56) References cited:
**EP-A1- 0 258 135       WO-A2-2013/114151
CH-A5- 574 105          CZ-U1- 25 984
JP-A- S6 371 620        JP-A- H04 116 424
JP-A- H06 300 861       JP-A- S56 124 076
JP-A- 2008 020 260      US-A1- 2011 073 771**

## Description

### The field of technology

The technical solution refers to a system for automatic measuring of the time course of height and temperature profile of snow layer and air temperature, allowing for export and calculations of other key hydrological indicators, in particular the snow water equivalent.

The present status of technology

Various methods are used for measuring of snow height. The classical way involves a snow stake which, however, requires visual reading. In the case of automatic reading e.g. patent document JP9269257 describes a device for detection of snow surface based on reflection of ultrasonic waves. JP9218033 describes a similar device in which speed of ultrasonic waves is corrected with air temperature.

A number of those methods are based on reflection of passage of light or other electromagnetic radiation. Currently, measuring of height of snow cover using devices measuring intensity of incident of reflected light is known; most of those devices have their own source of light.

Patent document JP 4048294 presents a device for measuring of snow height in which in a hollow tube elements emitting and receiving light are distributed vertically in specific intervals. When snow cover achieves a specific height, the elements emitting and receiving light are covered in snow. The emitted light is reflected by snow and recorded by a receiver.

Patent document JP4140605 describes a device for measuring of snow height in the form of two distant vertical units one of which containing an array of light sources with LED field and the other containing an array of light detectors.

Similarly, patent document US 2011219868 describes a device for measuring of snow height containing a snow collector which has a number of light sources vertically along one wall and a number of light sensors along the opposite wall.

Patent document JP 2003270358 describes a sensor of accumulated snow without use of an electric element. The sensor of accumulated snow consists of an optical fibre coiled around a support element. It contains a source of light impulses, and light radiation reflected from the point of change of temperature of the optical fibre on the snow layer surface is measured.

Patent document JP 52026274 describes the method of measuring of snow height by modulated light based on phase shift of reflected light and a device containing a projector of modulated light and a receiver.

Patent document JP 63210733 describes a similar method and a device for measuring of snow cover height, in which a light wave of modulated frequency is transmitted from the transmitter onto the snow cover surface. Light reflected from snow surface is received by a light waves receiver positioned on a rod standing on the ground. The height between the receiver and snow cover is calculated from the phase difference.

A device according to JP2011053147 measures directly the immediate snow water equivalent based on an amount of snow fallen into a heated collector.

All the above-mentioned instruments and devices containing their own sources of light or heat are energy-consuming. Most of them are complex in their structure as well, hard to install and operate. Therefore those instruments are inappropriate for remote areas with low traffic serviceability.

Patent document JPH06300861 describes a rod containing vertically a line of identical evenly distributed solar cells, an evaluation device comparing electromotive force of single cells with the reference cell in the upper part of the rod, an antenna and a display.

Patent document JP 56124076 describes an elongated transparent tube containing inside 2 lines of photoelectric elements. The tube is fixed in the ground and intensity of light striking upon couples of optical sensors positioned at various heights is measured. Values of the particular heights are compared to the value of the highest lying optical element. Intensity of light striking upon sensors covered in snow is lower. Couples of photoelectric elements were chosen for error minimization in the case of uneven snow distribution by the tube sides.

US 2011/073711 A1 discloses a method for determination of the snow water equivalent (SWE) using an ultrasonic transducer for measuring the height of a snow layer, which is more energy demanding than temperature sensors used in the present invention. At least one temperature sensor recording the temperature of the snow cover is (are) used only to identify whether said temperature has exceeded the set limit temperature. Optical sensors for continuous measurement of the height of the snow cover are not used. The measurement of the water supply in a snow layer is based primarily on the evaluation of data from two sensors, a gamma radiation and a microwave radiation sensor. In the present invention, the snow water equivalent (SWE) is calculated on the basis of a completely different principle, i.e. the records of snow height, snow profile temperature, snow temperature and snow cover age.

CH 547 105 A5 determines the density of the medium based on the material permitivity measured at two different frequencies. The single temperature sensor used being a thermistor serves only to compensate the values measured by permeability sensors located in the device, because the permitivity values of the material are temperature dependent. In contrary, in the present invention the snow water equivalent (SWE) is calculated on the basis the records of snow height, snow profile temperature, snow temperature and snow cover age using a sensor line consisting of the optical sensors in combination with the temperature sensors.

The problem with using optical sensors alone is impossibility of distinguishing between covering the sensors with snow and other materials such as leaves, bird droppings etc., which may cause a considerable measuring error, particularly in automatic devices operated in remote places without possibility of checking and regular maintenance.

Patent document EP 0258135 describes a device for measuring of height of snow and other materials which consists in a measuring rod on which a number of temperature sensors is positioned alongside so that at least a part of the rod is "submerged" in the product the height of which is being measured. Temperature values in various heights are recorded and response deviations are examined in time to identify the point of the lowest temperature sensor which sends signal the deviation of which is higher than the threshold one.

A disadvantage of temperature sensors is the effect of temperature of the ambient air, wind velocity, air humidity and e.g. rainfall, so that errors of detection of snow layer height may occur, in particular in severe protracted frost where there is no necessary temperature gradient between air and snow, and in inaccessible areas.

Those well-known devices give information on snow height only and cannot provide other data based on which data on snow layer parameters could be derived, in particular density and age of snow, snow water equivalent, expected rate of melting etc., which are the key parameters for hydrology.

Any calculation of snow layer parameters based only on the snow layer height is impossible, or the estimation is burdened with a considerable error.

It would be also appropriate if the device could be adjusted easily for the expected height of snow layer in the respective locality, e.g. up to 1 m or even up to 20 m.

It would be also appropriate if the device had the minimum horizontal size which would reduce air resistance of the device, air whirls and the rate of snow melting causing decrease in snow height (melt-off cone) around the device.

The devices according to the technology status are in most cases bulky (and long according to the snow height) and heavy so they do not allow for being carried on one's back to distant places in the mountains etc.

## Principle of the technical solution

Drawbacks of the existing status are eliminated and other advantages are brought about by a system as defined in claim 1 comprising at least one device for automatic measuring of the time course of snow height, the air temperature and the temperature profile of the snow layer which enable calculation of other hydrological parameters of snow layer, in particular the snow water equivalent and density, appropriate especially for measuring in inaccessible areas without need of checking and maintenance. Said device can be in a convenient design light, easy to store and easily portable.

The device for measuring of snow height contains basically vertically oriented sensor line consisting of regularly laid out optical sensors, which is connected to a control unit, where the line also contains regularly included temperature sensors. The term basically vertically means that the sensor line is oriented as needed or possible to be fixed either vertically or askew; the only condition is that at least a part of it passes through the whole snow layer. By placing the rod askew the vertical spacing of sensors in snow layer can be virtually shortened.

The optical sensor is a sensor measuring intensity of incident light, which can consist of a photodiode connected advantageously in a photovoltaic mode, integrated in one case with A/D converter circuits with resolution of e.g. 10 bits, linearization, temperature compensation and input/output circuits, the I2C bus with advantage. Lighting intensity in advantageous design is measured in a logarithmic scale.

The temperature sensor is a sensor for measuring of temperature with required precision, e.g. 0.1°C or better, and is advantageously integrated in one case with A/D converter circuits with resolution of e.g. 10 bits, linearization, temperature compensation and input/output circuits, the I2C bus with advantage. Temperature profile of snow layer shall mean an array of temperature values measured in various heights of the snow layer, or a course of snow layer temperature in relation to its height, or temperature gradient in the course of snow layer height.

The term "regularly included temperature sensors" means that in the sensor line the identical number of optical and temperature sensors may be present and an optical sensor and a temperature sensor may be e.g. also integrated in one case. Such a lay-out provides the most precise values.

A different number of optical and temperature sensors may be present, whereas the ratio of number of optical and temperature sensors is chosen with regard to the balance of the device price, amount of transmitted data and the required measuring precision. It was found out that with a small decrease in precision it is sufficient to have one temperature sensor for several optical sensors, e.g. one temperature sensor per two to ten optical sensors. In a different design, one temperature sensor per every five consecutive optical sensors is present.

The sensor line advantageously consists of a higher number of identical consecutive sensor modules where each of the sensor modules contains at least one optical sensor and at least one temperature sensor, e.g. one sensor module contains five to ten optical sensors and one to five temperature sensors, with mutual 2-cm spacing of all sensors.

Sensors/sensor modules are interconnected digitally through a communication bus, advantageously the I2C bus enabling interconnection by two data lines and two power supply conductors, with a control unit which contains a real time circuit, an energy source and a data carrier. The control unit may be arranged e.g. in the course or at one end of the sensor line, or it can be connected with the sensor line via a cable.

Data provided with precise time of measuring are stored in a data carrier of the control unit. Advantageously, the data carrier is removable which enables easy collection of data and copying them to a computer. The energy source is batteries placed e.g. in the control unit. In one design it is possible to send data in a specific time interval to the control centre for continuous monitoring.

Other designs may comprise, as required, other support circuits and interfaces, such as backup batteries of the real time circuit, USB converter, a module of wire or wireless data transmitter with antenna, a display etc. Advantageously, the connection is realized as considerably energy-saving. The limiting factor is quality of batteries and spontaneous decrease in voltage in them, the device take-off is minimal.

Such a design provides advantageous easy scalability of the device for adapting to local conditions, where it is possible to connect e.g. 4 modules, 25 cm long for an expected snow height of 1 m, or as many as 100 identical sensor modules and achieve the height of 25 m. Modules connected to a bus are identified advantageously by a unique module number.

In an advantageous design, optical and temperature sensors are fitted on a flexible (pliable) printed circuit. This increases the structure resistance to mechanical strain and decreases frequency of breakdowns. In the case of a design in the form of sensor modules the module can be made as a flexible printed circuit, potentially equipped with appropriate linking connectors. Such a printed circuit may comprise even two or more modules in series.

The sensor line may be placed advantageously in a protective solid tube or a flexible hose made of transparent or translucent material, e.g. polycarbonate, PVC or silicone, and the hose or the sensor line may contain appropriate elements to ensure mechanical strength, e.g. a steel cable passing alongside. It ensures protection from humidity and weather conditions, and the structural length of the device can be easily adapted to the local conditions. The design in a solid tube (a self-supporting solution) is appropriate for use on glaciers where it is possible to dig and the tube can be placed safely in the pre-dug hole in ice.

Flexibility of the printed circuit enables, in the cases that the printed circuit is protected with e.g. a flexible silicone hose, comfortable handling of the device and subsequent installation (the device is space-saving and light while carried; it can be advantageously rolled up during transport or storing).

Advantageously, the protective solid tube or flexible hose consist of multiple layers, e.g. an inside tube the role of which is mechanical support and connecting of sensor modules, e.g. using pull-on elements protecting the circuits, shrinkable hoses etc., and an outside tube the key role of which is protection of the whole device from penetration of humidity.

The above-mentioned designs are made with emphasis on the minimum horizontal sizes of the device. Thus the effect of the "melt-off cone" is reduced, i.e. decrease in height of snow, which occurs around all objects that accumulate heat. Therefore the device has, compared to the existing solutions, low air resistance and can be made light and easily portable so that it minimizes air whirls and snowdrifts.

The sensor line is fixed advantageously basically vertically upwards from the ground hung in a supporting structure. The supporting structure can be made as a straight or bent solid rod of an appropriate length, with the first end connected firmly to the ground and the second end pointing basically upwards from the ground, whereas between the second end of the rod and the ground, in the point distant horizontally from the first end of the rod the sensor line is fixed vertically. The term "basically upwards from the ground" includes e.g. a rod pointing upright provided with a horizontal or skew yard, a bent rod or a straight rod pointing askew from the ground, where the only essential condition is that the first end of rod does not lie vertically above the second end of rod .

If only a vertical supporting structure is available, the necessary horizontal distances of the lower end of the sensor line from the bottom of the supporting structure can be also achieved using the above-mentioned askew position of the sensor line.

The term "connected firmly to the ground" in this context means direct fixing of the rod into the base, such as earth's surface, ice etc., as well as the firm connection of the rod with the horizontal part of the structure which lies/is fixed to any solid surface.

The term "the ground" in this context means both the case where the sensor line is fixed directly to the base, such as earth's surface, ice, concrete etc. and the case where the sensor line is fixed directly to a part of the supporting structure passing from the first end of rod basically in parallel with the earth's surface to under the second end of rod.

The term "horizontally distant" means such a distance that the supporting structure influences as little as possible the properties of the sensor line, as at least five-fold, advantageously at least ten-fold and even more advantageously at least twenty-fold of diameter of the protective solid tube or flexible hose.

The supporting structure may be made advantageously for easy carrying as a straight or bent flexible rod, with the first end connected firmly to the ground, whereas between the second end of the rod and the ground, in the point distant horizontally from the first end of the rod the sensor line is laid out vertically. The suporting structure can be made of metal and/or plastic, i.e. glass fibre. In the hung-up arrangement, the advantage of the minimum influencing of the surrounding snow height by the device according to the invention manifests the most.

However, the sensor line can be fixed basically vertically from the ground also inside the self-supporting structure which may be a solid transparent plastic tube, adapted e.g. for being dug into the ground or snow. As mentioned above, the sensor line may be inserted to a pre-dug hole in ice. The sensor line may be also fixed vertically from the ground on the surface of structure which e.g. exists in the place of measuring.

Optical and temperature sensors placed in the sensor line measure in regular intervals intensity of light and temperature in the course of height of snow cover, i.e. in single layers of snow cover. Snow around the device causes decrease in light penetration. Based on analysis of results of the particular optical sensors it is possible to find the area where snow is already present (and thus decreases the recorded light intensity). Thus information on the snow height is achieved.

Although optical sensors are very sensitive (sensitivity increases with decreasing light intensity); however, as mentioned above, the optical sensors themselves cannot distinguish sensor covering in snow or other materials, which is a problem particularly in remote places without a possibility of checking and regular maintenance. In addition, all well-known devices based on the principle of light sensors alone or heat sensors alone, or devices based on other principles give also information on snow height only (or also on air temperature at the most). Therefore other data is lacking, from which data on the snow layer parameters could be derived, in particular snow water equivalent, initial density and age of snow, expected rate of melting, etc., which are important for hydrology.

A combination of optical sensors with temperature sensors not only guarantees higher reliability and measuring precision, but data on temperature gradient are received in addition to the light gradient as well. Based on temperature gradient along the snow cover height and air temperature above the snow cover (data of the temperature sensors) in combination with the known snow height and "age" of each layer (data of the optical sensors), it is possible to also simulate, particularly based on the time course of measured data, snow density, or snow water equivalent, which is fundamental for the operative hydrology. Information on how much water is in the form of snow, or what rate of melting can be expected, is more important than the mere knowledge of snow height.

Any calculation of snow layer parameters based only on the height of snow cover is burdened with a considerable error, as mentioned below.

Snow is subject to mechanical settling, caused by metamorphosis of grains and weight of layers. To calculate snow density the settling law can be used, formulated by Navarre (Navarre, J.P. (1975): Modele unidimensionenel d'evolution de la neige deposee. Modele perce-neige. Meteorologie. 4(3), pp. 103-120):

$$\frac{de}{e} = \frac{-\sigma}{\eta}dt$$

$$\text{kde} \quad \eta = \frac{6.10^4}{1 - f(d)} e^{23\rho_n - 0.1(T_n - T_0)}$$

where e is a layer thickness (m), de is a change of layer thickness, $\sigma$ is vertical pressure (Pa), $\eta$ is viscosity (Pa.s) and dt is time interval (s), f(d) is a function of snow type; in this case the model does not describe evolution of snow grains and therefore we consider f(d) the constant equal to 0.4, $T_0$ - melting temperature (273.16 K), $T_n$ - temperature of snow, $\rho_n$ - snow density. Into this relation the data according to measuring can be entered: de/e as a change of layer thickness/layer thickness, according to results of measuring of snow height, and dt - time interval of measuring. With f (d) = const. and calculation of viscosity $\eta$, $\rho_n$ - snow density can be achieved. Using of an only temperature of snow instead of the course of temperature in snow layer and other simplifications may have serious layers, but without explicit modelling of metamorphosis of snow grains no satisfactory solution can be found.

On the other hand, using the device according to the invention provides time course of the data on height of snow, age of single layers, air temperature and temperature gradient of snow so it is it possible to model snow density very well, as the dominant factors for progression of snow density are time or time development of air temperatures and temperatures in single heights of snow layer (temperature gradient) (Martinec, 1977 in Singh P., and Singh V.P. 2001: Snow and Glacier Hydrology. Kluwer Academic Publisher Group (Netherlands), s. 764, ISBN: 9780792367673).

The invention provides a system for automatic measuring of the time course of snow height, air temperature and temperature profile of snow layer and for determination of snow water equivalent based on these data, which contains

- at least one device (1) described above in a continuous or periodical data connection with the central computer,

- a central computer containing hardware and software means for calculating of snow water equivalent based on data received from at least one device (1).

Hardware means mentioned herein are above all usual means for reception and storing of input data, means for reading of the saved input data and mathematical processing of them, and means for saving of output data, or sending them and/or displaying them, in particular a control unit, power supply circuits, USB interface for connection to a computer, a connector of connecting of sensor modules, a service connector, a slot for SD card, backup batteries of the clock etc.
Software means mentioned herein are drivers, an application of terminal communication, setting of data and time, programme equipment for conversion and checking of input data, entering them into the relevant model and modelling of the current and future hydrological parameters of snow layer, particularly water equivalent, density and rate of melt-off. Other input data for predictions can be meteorological forecasts for the local area.

**Overview of pictures in drawings**

Technical solution is clarified in the drawings where

Fig. 1 illustrates an overall view of the device in a self-supporting design,

Fig. 2 illustrates (a) a view of the fitted printed circuit of a sensor module, (b) an overall view of a sensor module in a protective tube, and (c) a view of an optional realization of connection of two sensor modules using pull-on elements before inserting into an outside protective tube.

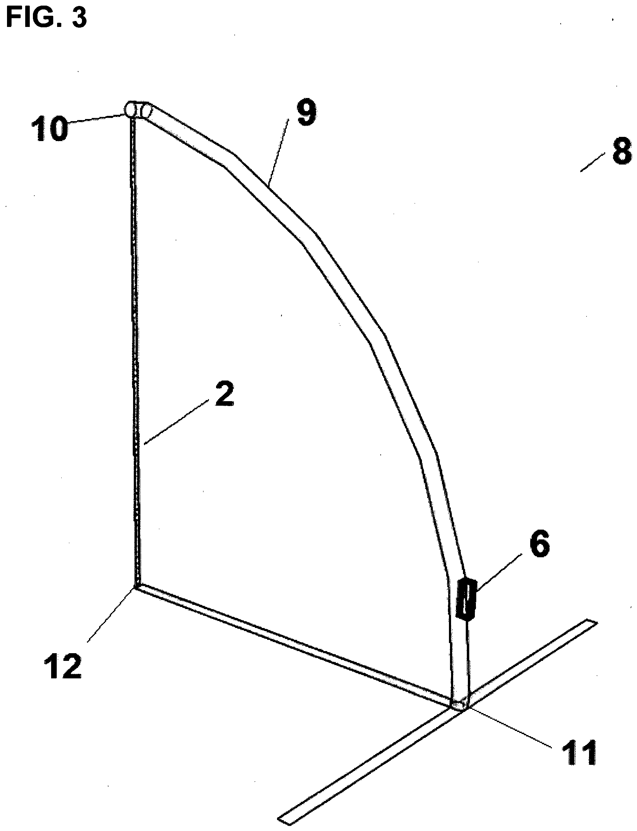

Fig. 3 illustrates an overall view of the device hung on a supporting structure,

Fig. 4 illustrates a record of measuring by photodiodes,

Fig. 5 illustrates the resulting daily averages of air temperatures and snow profile,

Fig. 6 illustrates the time course of snow cover height, and

Fig. 7 illustrates a simulated time course of snow water equivalent.

**Examples of technical solution implementation**

Example 1

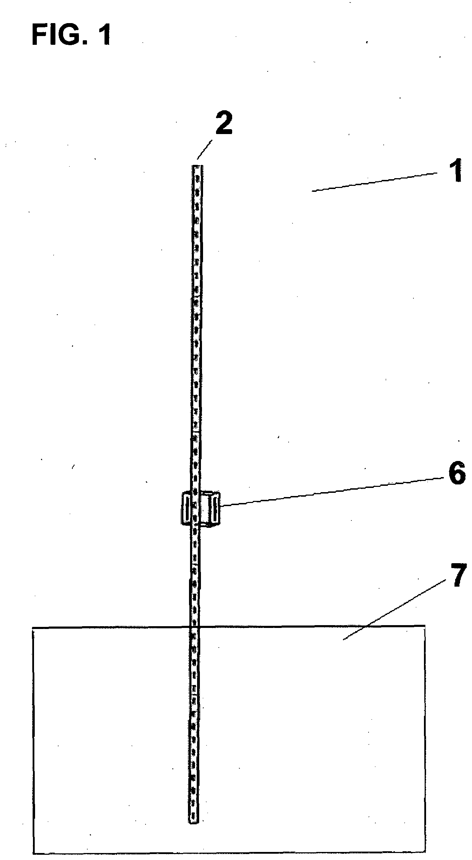

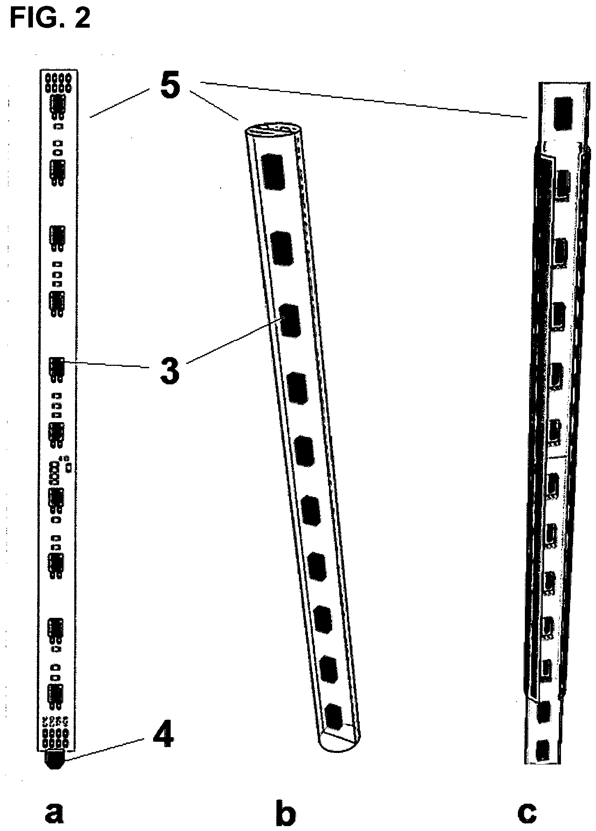

The device 1 for measuring of the time course of height and temperature profile of snow layer and air temperature illustrated in Fig. 1 consists of a sensor line 2 which consists of 8 identical sensor modules 5 shown in Fig. 2 interconnected via a communication bus of the I2C type. The communication bus is connected to a control unit containing a source of energy. Each sensor module 5 contains 10 optical sensors 3 and one temperature sensor 4.
The temperature sensor 4 is a digital thermometer measuring temperature from - 55°C to +125°C with precision of 0.1 °C, which converts the temperature data to a 12-bit digital word.
The optical sensors 3 are photodiodes connected in a photovoltaic mode which measure intensity of lighting in a logarithmic scale so they are applicable even in unfavourable light conditions. The measured values are in 10-bit resolution.
The optical and temperature sensors placed in the respective sensor modules 5 measure intensity of light and temperature in regular intervals along the sensor line 2, i.e. even in separate layer of snow cover. The data is exported to a communication bus and saved in a data carrier of the control unit 6. All sensor modules are identical and interchangeable and they are distinguished by their numerical address only.
The control unit 6 obtains periodically data from sensor line 2. The data is provided with the precise time of measurement and saved in a data carrier. The data carrier is removable which enables easy data collection and copying of them to a computer.
The whole device is designed for feeding from batteries with low self-discharge and necessary resistance to frost, which are placed in the control unit 6. Measuring lasting 3 s with 1-hour period is energy low-demanding. Durability of batteries in an ordinary measuring mode is several months.

The printed circuits of modules 5 placed in the inside transparent protective tube shown in Fig. 2b are stabilized using pull-on elements, as shown in Fig. 2c, before being inserted into the outside protective self-supporting tube made of transparent PVC with the length of 4 m, appropriate for inserting to an approx. 1-m dug hole in glacier 7.

Example 2

Sensors 3,4 and supporting electronics are fitted on a flexible (pliable) flat printed circuit. Thanks to it the sensor line 2 can be rolled up for transport or storing.

The sensor line 2 is put in a transparent silicone tube which guarantees protection from humidity and weather conditions. The sensor line 2 is fixed vertically from the ground to the supporting structure 8, which is made as a bent metal rod 9, which is connected to the ground with the first end 11, and with the second end 10 it points upwards askew from the ground, whereas between the second end 10 of the rod 9 and the ground, in the point 12 distant horizontally from the first end 11 of the rod 9, a sensor line 2 is laid along vertically. The firm connection with the ground herein is realized via a horizontal pedestal with an element connecting the first end 11 and point 12 providing fixing of the sensor line 2. The control unit 6 is put on the metal rod 9.

In another design (not presented) the rod 9 is realized as a straight flexible rod made of glass-fibre laminate insertable into a horizontal pedestal of a pre-dug hole in the ground. By stretching the sensor line 2 between the second end 10 of the rod 9 and the ground or the pedestal the necessary flexible bending of the rod 9 is achieved.

The sensor line 2 is connected to the control unit 6 via a cable. In the design intended for remote data transfer (not presented) the control unit 6 is fitted with an antenna and positioned on the highest part of the metal rod 9 near the second end 10.

Example 3

Each module 5 (or every two modules, i.e. 50 cm) is protected separately in a tube with closed ends with contacts led out to the terminal surfaces of the tube, as presented in Fig. 2b, and the particular tubes are connected to each other via pull-on elements as shown in Fig. 2c. The solid connection is provided by the second outside tube into which the respective modules are inserted so that the tube connection with a module is inside the outside protective tube. The number of modules and length of the outside tube are selected according to the expected height of snow. The advantage of the solution is easy transport and handling.

Example 4

Below, the characteristics measured using the device according to the invention will be described and the procedures how to specify important parameters of snow cover in the phase of its accumulation will be mentioned.

1.1. Snow cover height

The device measures the snow cover depth on the basis of reduced light penetration. Fig 1 shows an example of the record of device of 25/02/2010 and 21/03/2010 at 6 a.m., 12 a.m. and 6 p.m. of CET. The vertical line indicates the height of snow cover at 12:00. Circles represent values obtained by the respective diodes of the sensor line. The border of snow cover occurrence is clearly visible in the decrease in radiation. In another design, the algorithm is extended with a step of validation of measuring by comparing whether the values measured by photodiodes correspond to the values measured by temperature sensors.

In hydrology point of view, knowledge of snow water equivalent - SWE - is important, i.e. height of water which would set in by melting of the whole snow layer, started in metres (m). The value can be determined on the basis of knowledge of density and height of the snow cover.

1.2 Density of snow cover

Snow cover density is normally determined using a gravimetric method, i.e. by determining the weight of the known volume of snow. If the data is not available, density of fresh snow is determined empirically and it has usually values around 100 kg/m$^3$. However, there is a slight linear relation between density of fresh snow and snow temperature (napr. Judson, A., Doeksen, N. (2000): Density of Freshly Fallen Snow in the Central Rocky Mountains, Bulletin of the American Meteorological Society), and therefore it is possible to correct the value slightly based on data of air temperature. Masahiro KAJIKAWA; Noboru SATO; Yoshio ASUMA; Katsuhiro KIKUCHI, (2006): Characteristics of fresh snow density and compressive viscosity in the Arctic region, Journal of the Japanese Society of Snow and Ice, describe linear relation between intensity of snowing and snow density. The device according to the invention enables monitoring of snowing intensity (growth in the snow cover in time), therefore density can be also modified with this relation.

1.3 Snow water equivalent, SWE

If there are data on the height of freshly fallen snow available and estimation of density of the snow available, SWE can be determined by equation:

$$SWE = h_s \, \rho_s / \rho_w \qquad\qquad (1)$$

where SWE = snow water equivalent (water reserve in snow) [m], $h_s$ = snow height [m], $\rho_s$ = snow density [kg/m$^3$] a $\rho_w$ = water density [kg/m$^3$]

Based on the above-mentioned data water reserve in snow can be estimated approximately. Density of freshly fallen snow is estimated, whereas there are two possibilities how to make the density estimation more precise based on other monitored parameters (air temperature or intensity of snowing).

1.4 Temperature of air and snow

Temperature is measured using a device according to the invention in snow cover by temperature sensors, air temperature is measured by temperature sensors above the snow cover and/or an external sensor outside the sensor line. Air temperature is used in modelling of melting, temperature measured in the snow profile serves for distinguishing whether water already flows from snow or whether water formed through melting on snow cover surface is only captured in lower layers of snow, which does not reduce water reserve in snow, it only increases the total density of snow.

1.5 Intensity of radiation

Data of photodiodes represent non-dimensional number describing intensity of radiation. This information plays an important role in subsequent modelling of development of snow cover, since based on the data length of the light day can be determined, or days with direct sunshine when melting is faster can be distinguished from days with prevailing diffused sunshine. The data is important for determination of the temperature factor (Degree-Day Factor, DDF), described below.

2. Modelling of SWE progression

There is a range of models (e.g.: Motovilov, Y., G. (1986): A model of snow cover formation and snowmelt processes, Modelling Snowmelt-Induced Processes, Perry Bartelt, Michael Lehning, (2002): A physical SNOWPACK model for the Swiss avalanche warning: Part I: numerical model), simulating, based on meteorological data, selected parameters of snow cover, such as density or SWE which is the most important hydrological parameter. The models are based on mathematically formulated physical relations between meteorological inputs and simulated characteristics of snow cover. They are relatively demanding as for input parameters so in addition to air temperature and snow temperature obtained by the device according to the invention, information on atmospheric heat flows is needed (heat inputs in the result causing melting of snow cover).

If there is no comprehensive information on energy flows available, such as shortwave or long-wave radiation which has effect on development of snow cover, it is possible to replace the sum of those energies with air temperature. The physical reason of the definition of input energies using temperature is the fact that the greatest source of energy for melting is longwave radiation. In combination with the sensible heat it means about 75 % of all energy for snow melting (Braithwaite, R.J., Olesen, O.B. (1990): Response of the energy balance on the margin of the Greenland ice sheet to temperature changes. J. Glaciol. 36 (123), 217-221, et al.). The simplification is used in modelling of development of snow cover identified as a temperature index method which defines what amount of snow (converted to the water column height in mm) thaws per each positive degree a day.

2.1 Temperature index method

The basic equation for determination of melting or decrease of water reserve in snow can be written (Hock, R. (2003): Temperature index melt modelling in mountain areas, J. Hydrol., 282, p. 104-115) as:

$$\sum_{i=1}^{n} M = DDF \sum_{i=1}^{n} T^{+} \Delta t)$$

where M = total melt [mm], DDF = temperature factor [mm/°C*d], n = number of time intervals, $\Delta t$ = time interval [day], T+ = positive temperature of air [°C]. Frm the measured air temperature the corresponding total melt is determined. The value of temperature factor DDF plays an in important role. The DDF value is determined empirically; for different areas there are preliminary recommended values that are subject to seasonal changes and to determine and adapting of the factor the photodiode data of the device according to the invention are used.

The total melt is determined based on the temperature index method. in fact, the reserve of water in snow need not be always reduced by the volume of water M from the equation. In this we stem from the following two presumptions:

1. water in snow in the liquid phase always moves in the direction of gravity forces

2. if the measured temperature of snow cover is lower than 0°C, snow does not contain water in the liquid phase

Although during a day a positive temperature of air may be measured in which case the snow theoretically melts, based on the first presumption water may freeze in lower layers of snow only. Therefore, if temperature of snow cover measured by the device according to the invention is lower than 0°C, water does not flow off snow and the snow value does not decrease.

Calculation procedure

| | Variables | Units |
|---|---|---|
| Ta | - measured temperature of air | [°C] |
| Ts | - measured temperature of snow | [°C] |
| h | - measured height of snow | [m] |
| DDF | - estimated temperature index | [mm/°C*d] |
| $\rho_{new}$ | - estimated density of fresh snow | [kg/m$^3$] |
| SWE - | simulated snow water equivalent | [mm] |

Initial conditions - parameters of the snow cover:
$h_0$ = 0 - height of snow in time 0
$SWE_0$ = 0 - snow water equivalent in time 0

Calculation of SWE in time t, calculation step 1 day, DDF for the respective locality = 3

$$DDF_t = \begin{cases} 3 & \text{if } Ta_t > 0 \ \& \ Ts_t = 0 \quad (3) \\ 0 & \text{if } Ta_t < 0 \text{ or } Ts_t < 0 \quad (4) \end{cases}$$

$$\rho_{new\,t} = \begin{cases} 120 & \text{if } Ta_t > -6 \quad (5) \\ 130 & \text{if } Ta_t \leq -6 \quad (6) \end{cases}$$

$$SWE_t = \begin{cases} SWE_{t-1} + (h_t - h_{t-1}) * \rho_{new} - DDF_t * T_t & \text{if } h_t > h_{t-1} \quad (7) \\ SWE_{t-1} - DDF_t * T_t & \text{if } h_t \leq h_{t-1} \quad (8) \end{cases}$$

$$SWE_t = \begin{cases} SWE_t & \text{if } SWE_t > DDF_t * T_t \quad (9) \\ 0 & \text{if } SWE_t \leq DDF_t * T_t \quad (10) \end{cases}$$

Density of fresh snow $\rho_{new}$ was determined 120 kg/m³ for air temperatures $Ta_t$ lower than -6°C and 130 kg/m³ for higher temperatures. Temperature index DDF was determined without an additional calibration at 3 mm/°C*d, which is the value corresponding to the tested area.

2.2 Measured inputs

Air temperature and temperature of snow and height of snow cover

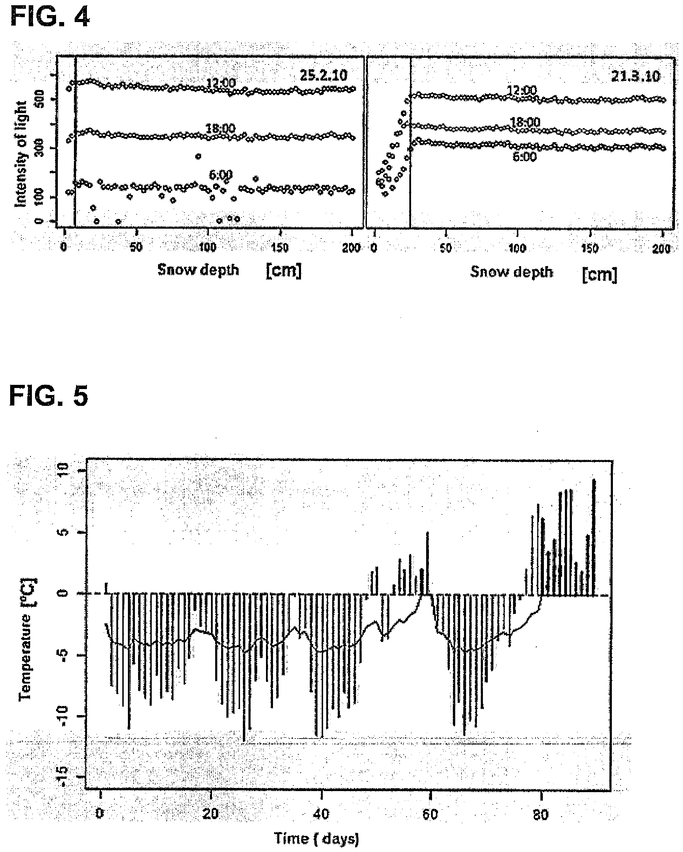

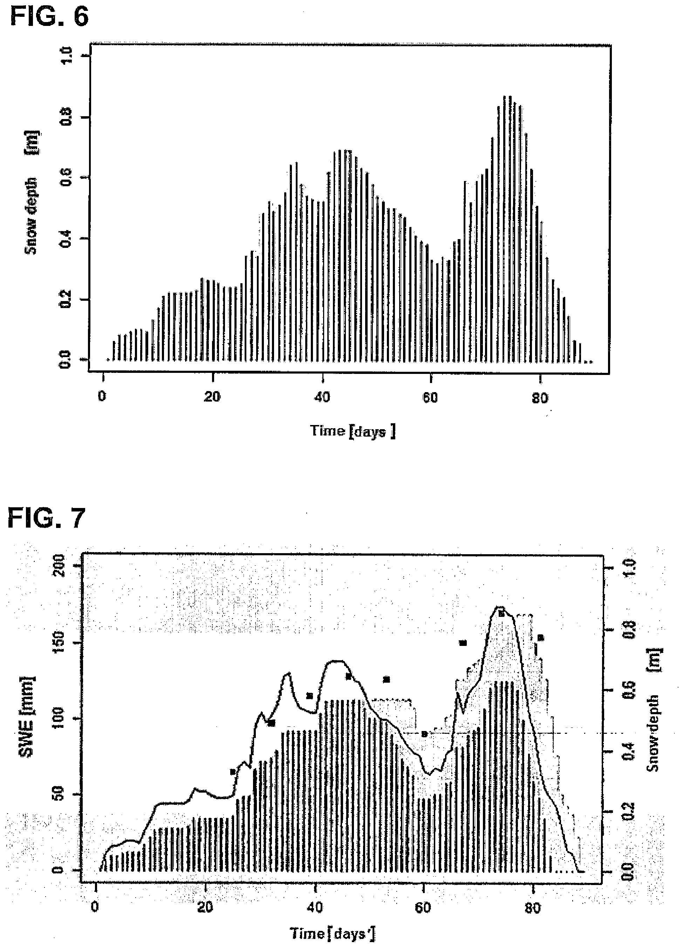

The graph in figure 5 illustrates the measured air temperatures as thin vertical strokes, negative, positive from 0 °C a and the course of temperature of snow cover (the line in the area $\leq$ 0 °C, representing the average temperature of temperature sensors of devices positioned in the snow cover). Where temperature of snow cover is 0°C, temperatures of air are highlighted (thick positive vertical strokes). That is because these temperatures project in the model of SWE decrease. The graph in figure 6 illustrates in the form of vertical strokes the measured heights of snow cover in the same time interval.

2.3 Simulated SWE values and compliance of the model with reality

The graph in figure 7 shows the resulting simulated development of snow water equivalent (SWE). The simulated development using the information on snow cover temperature from the device according to the invention is illustrated as the gray area, the vertical stokes illustrate development of SWE simulated without using snow temperature - it means without meeting the first condition in the above-mentioned calculation of DDF. Measured values are shown as full squares. The black line is the measured snow height found out based on information from photodiodes.

The compliance of models with measured values of a device according to the technology status without temperature sensors and of the device according to the invention considering information from temperature sensors situated in snow cover in the same place as photodiodes (between them) is shown in the following table:

| In the model, temperature of snow is: | not taken into account | taken into account |
| --- | --- | --- |
| Nash-Sutcliff coefficient: | -1.46 | 0.65 |
| Correlation coefficient: | 0.62 | 0.97 |

The table implies that value of the correlation coefficient (0 = without correlation, 1 = fully linear relation) using the information from temperature sensors considerably approached one. Likewise, the Nash-Sutcliff coefficient of hydrological forecast efficiency (with values ranging from $-\infty$ to 1, whereas efficiency 1 corresponds to the perfect compliance of the flow-off model with the observed data and effectiveness 0 means that the model forecast is as precise as the average of the observed data) indicates considerable improvement of the model precision.

The above-mentioned values clearly imply that inclusion of temperature profile of snow cover makes modelling of snow cover water equivalent considerably more precise. If a more complex model with stricter requirements for measured values (see e.g. Motovilov mentioned above) the benefit would proved even more markedly. The data from automatic remote reading is directly utilizable in predicting of the rate of snow melt-off.

**Industrial applicability**

The system comprising at least one device according to the technical solution can be used for measuring of the time course of height and temperature profile of snow layer and air temperature, and subsequent evaluation of the measured data. The device is applicable to monitoring of seasonal development of snow cover without need of frequent operation. The solution is, depending on the design options, appropriate both for direct placement on the ground and for use in glaciers. The device is also onvenient for remote locations where data is collected over a longer period of time without need of checking or operating. Based on the data, other data on development of snow cover, age and quality of snow can be simulated.

**Claims**

1.  A system for determination of the snow water equivalent (SWE) of a snow layer comprising:

    • at least one device (1);
    • a central computer; **characterized in that**:
    • the at least one device (1) comprises a basically vertically oriented sensor line (2) which consists of regularly laid out optical sensors (3) and temperature sensors (4) for automatic measuring of the time course of snow height (Hs), the air temperature (Ta) and the temperature profile of the snow layer (Ts);
    • the at least one device (1) is interconnected with a control unit (6) and is configured to be in continuous or periodical data connection with the central computer;
    • the central computer contains the appropriate hardware and software elements for calculation of snow water equivalent (SWE) based at least on the snow height (Hs), air temperature (Ta) and snow temperature (Ts) data received from said at least one device (1).

2.  A system according to claim 1, **characterized by** the sensor line (2) having one temperature sensor (4) added regularly for every one to five optical sensors (3).

3.  A system according to any of the preceding claims, **characterized by** the sensor line (2) consisting of a number of identical sensor modules (5) where each of these sensor modules (5) contains at least one optical sensor (3) and at least one temperature sensor (4).

4.  A system according to claim 3, **characterized by** each sensor module (5) containing five to ten optical sensors (3) and one to five temperature sensors (4).

5.  A system according to any of the preceding claims, **characterized by** the sensors (3,4) being fitted to flexible printed circuits.

6.  A system according to any of claims 3 to 5, **characterized by** the sensor modules (5) being made as flexible printed circuits.

7.  A system according to any of the preceding claims, **characterized by** the sensors (3,4) or the sensor modules (5) being interconnected with the control unit (6) digitally via a communication bus, in particular an I2C bus.

8.  A system according to any of the preceding claims, **characterized by** the control unit (6) containing a real time circuit, a power source and a data carrier, in particular a removable data carrier.

9.  A system according to any of the preceding claims, **characterized by** the control unit (6) being positioned within the sensor line (2) or at one of the ends of the sensor line (2), or being positioned outside the sensor line (2) and connected to it via a cable.

10. A system according to any of the preceding claims, **characterized by** the control unit (6) being functionally connected to one or more devices of the group of a backup battery of the real time circuit, a USB converter, a module of a wire data transmitter or wireless data transmitter with antenna, and a display.

11. A system according to any of the preceding claims, **characterized by** the sensor line (2) being placed in an inflexible tube or a flexible hose made of transparent or translucent material.

12. A system according to claim 11, **characterized by** the sensor line (2) being fixed hanging on a supporting structure (8).

13. A system according to claim 12, **characterized by** the supporting structure (8) being made as a straight or bent solid rod (9) tightly connected via the first end (11) to the ground and via the second end (10) pointing upwards from the ground, whereas between the second end (10) of the rod (9) and the ground, in the point (12) horizontally distant from the first end (11) of the rod (9), the sensor line (2) is fixed vertically.

14. A system according to claim 12, **characterized by** the supporting structure (8) being made as a straight or bent flexible rod (9) tightly connected via the first end (11) to the earth and via the second end (10) pointing upwards from the earth, whereas between the second end (10) of the rod (9) and the earth, in the point horizontally distant from the first end (11) of the rod (9), the sensor line (2) is fixed vertically.

**Patentansprüche**

1. System zur Ermittlung des Wasseräquivalents der Schneedecke (SWE) umfassend:

   - mindestens eine Vorrichtung (1);
   - einen Zentralrechner;

   **dadurch gekennzeichnet, dass**

   - mindestens eine Vorrichtung (1) eine im Wesentlichen vertikal ausgerichtete Sensorreihe (2) umfasst, die aus hintereinander regelmäßig angeordneten optischen Sensoren (3) und Temperatursensoren (4) für automatische Messung des zeitlichen Verlaufs der Schneehöhe (Hs), der Lufttemperatur (Ta) und des Temperaturprofils der Schneedecke (Ts) besteht;
   - mindestens eine Vorrichtung (1) mit der Steuerung (6) verbunden ist und für kontinuierliche oder periodische Datenverbindung mit dem Zentralrechner konfiguriert ist;
   - der Zentralrechner entsprechende Hardware- und Softwareelemente für die Berechnung des Wasseräquivalents der Schneedecke (SWE) auf der Grundlage der mindestens von der einen genannten Vorrichtung (1) empfangenen Daten mindestens der Schneehöhe (Hs), der Lufttemperatur (Ta) und des Temperaturprofils der Schneedecke (Ts) umfasst.

2. System nach Anspruch 1, **dadurch gekennzeichnet, dass** in der Sensorreihe (2) jeweils ein Temperatursensor (4) je einen bis fünf optische Sensoren (3) regelmäßig angeordnet ist.

3. System nach einem der vorhergehenden Ansprüche, **dadurch gekennzeichnet, dass** die Sensorreihe (2) aus einer Mehrzahl identischer Sensormodule (5) besteht, wobei jedes dieser Module (5) mindestens einen optischen Sensor (3) und mindestens einen Temperatursensor (4) umfasst.

4. System nach Anspruch 3, **dadurch gekennzeichnet, dass** jedes Sensormodul (5) fünf bis zehn optische Sensoren (3) und einen bis fünf Temperatursensoren (4) umfasst.

5. System nach einem der vorhergehenden Ansprüche, **dadurch gekennzeichnet, dass** die Sensoren (3,4) auf flexiblen Leiterplatten bestückt sind.

6. System nach einem der Ansprüche 3 bis 5, **dadurch gekennzeichnet, dass** die Sensormodule (5) als flexible Leiterplatten ausgebildet sind.

7. System nach einem der vorhergehenden Ansprüche, **dadurch gekennzeichnet, dass** die Sensoren (3, 4) oder Sensormodule (5) über einen Kommunikationsbus, insbesondere den I2C-Bus, mit der Steuerung (6) digital verbunden sind.

8. System nach einem der vorhergehenden Ansprüche, **dadurch gekennzeichnet, dass** die Steuerung (6) eine Echtzeit-Uhr, eine Energiequelle und ein Speichermedium, insbesondere ein herausnehmbares Speichermedium, umfasst.

9. System nach einem der vorhergehenden Ansprüche, **dadurch gekennzeichnet, dass** die Steuerung (6) im Verlauf der Sensorreihe (2) oder an einem der Enden der Sensorreihe (2), oder außerhalb der Sensorreihe (2) angeordnet ist und mit dieser über ein Kabel verbunden ist.

**10.** System nach einem der vorhergehenden Ansprüche, **dadurch gekennzeichnet, dass** die Steuerung (6) an eines der Vorrichtungen aus der Gruppe Echtzeit-Uhr-Pufferbatterie, USB-Konverter, drahtgebundenes Datensendermodul oder drahtloser Datensender mit Antenne und Display funktionell angeschlossen ist.

**11.** System nach einem der vorhergehenden Ansprüche, **dadurch gekennzeichnet, dass** die Sensorreihe (2) in einem festen Rohr oder einem flexiblen Schlauch aus einem durchsichtigen oder transparenten Material angeordnet ist.

**12.** System nach Anspruch 11, **dadurch gekennzeichnet, dass** die Sensorreihe (2) an einer Tragkonstruktion (8) eingehängt befestigt ist.

**13.** System nach Anspruch 12, **dadurch gekennzeichnet, dass** die Tragkonstruktion (8) als eine gerade oder gebogene starre Stange (9) ausgebildet ist, die mit einem ersten Ende (11) mit der Erde fest verbunden ist und mit einem zweiten Ende (10) von der Erde hin nach oben zeigt, wobei zwischen dem zweiten Ende (10) der Stange (9) und der Erde, an einer von dem ersten Ende (11) der Stange (9) horizontal beabstandeten Stelle (12), die Sensorreihe (2) vertikal befestigt ist.

**14.** System nach Anspruch 12, **dadurch gekennzeichnet, dass** die Tragkonstruktion (8) als eine gerade oder gebogene flexible Stange (9) ausgebildet ist, die mit einem ersten Ende (11) mit der Erde fest verbunden ist und mit einem zweiten Ende (10) von der Erde hin nach oben zeigt, wobei zwischen dem zweiten Ende (10) der Stange (9) und der Erde, an einer von dem ersten Ende (11) der Stange (9) horizontal beabstandeten Stelle, die Sensorreihe (2) vertikal befestigt ist.

**Revendications**

**1.** Système de détermination de l'équivalent en eau de la neige (SWE) d'une couche neigeuse comprenant :

- au moins un dispositif (1) ;
- un ordinateur ;

**caractérisé en ce que**

- au moins un dispositif (1) comprend une ligne de détection orientée par principe verticalement (2), constituée de capteurs optiques (3) et de capteurs de température (4) régulièrement espacés aux fins de mesures automatiques dans le temps des variations du niveau de la neige (Hs), de la température de l'air (Ta) et du profil thermique de la couche de neige (Ts) ;
- au moins un dispositif (1) est connecté à l'unité de commande (6) et est configuré pour une connexion de données continue ou périodique avec l'ordinateur ;
- l'ordinateur comprend les éléments matériels et logiciels nécessaires pour le calcul de l'équivalent en eau de la neige (SWE) sur la base minimale des données reçues à partir du dispositif susmentionné (1), relatives au niveau de la neige (Hs), à la température de l'air (Ta) et au profil thermique de la couche de neige (Ts).

**2.** Le système, conformément à la revendication 1, **est caractérisé en ce qu'un** capteur de température (4) est régulièrement disposé sur tous les un à cinq capteurs optiques (3) dans la ligne de détection (2).

**3.** Le système, conformément à l'une des quelconques revendications précédentes, **est caractérisé en ce que** la ligne de détection (2) est formée par un plus grand nombre de modules de détection identiques (5), où chacun desdits modules de détection (5) comprend au moins un capteur optique (3) et au moins un capteur de température (4).

**4.** Le système, conformément à la revendication 3, **est caractérisé en ce que** chaque module de détection (5) comprend cinq à dix capteurs optiques (3) et un à cinq capteurs de température (4).

**5.** Le système, conformément à l'une des quelconques revendications précédentes, **est caractérisé en ce que** les capteurs (3,4) sont montés sur des joints de surface souples.

**6.** Le système, conformément aux revendications 3 à 5, **est caractérisé en ce que** les modules de détection (5) sont conçus comme des joints de surface souples.

**7.** Le système, conformément à l'une des quelconques revendications précédentes, **est caractérisé en ce que** les capteurs (3,4) ou les modules de détection (5) sont connectés par voie numérique avec l'unité de commande (6) par le bus de communication, en particulier le bus I2C.

**8.** Le système, conformément à l'une des quelconques revendications précédentes, **est caractérisé en ce que** l'unité de commande (6) comprend un circuit en temps réel, une source d'alimentation et un support de stockage, en particulier un support de stockage amovible.

**9.** Le système, conformément à l'une des quelconques revendications précédentes, **est caractérisé en ce que** l'unité de commande (6) est située sur la ligne de détection (2) ou à l'une des extrémités de la ligne de détection (2), ou bien est située à l'extérieur de la ligne de détection (2) et est connectée avec cette dernière par voie filaire.

**10.** Le système, conformément à l'une des quelconques revendications précédentes, **est caractérisé en ce que** l'unité de commande (6) est connectée de manière opérationnelle à un ou plusieurs dispositifs du groupe de batterie de secours du circuit en temps réel, au convertisseur USB, au module de l'émetteur de données filaire ou de l'émetteur de données radio avec une antenne et un écran.

**11.** Le système, conformément à l'une des quelconques revendications précédentes, **est caractérisé en ce que** la ligne de détection (2) est placée dans un tube rigide ou un conduit souple en matériau transparent ou translucide.

**12.** Le système, conformément à la revendication 11, **est caractérisé en ce que** la ligne de détection (2) est montée en suspension sur une structure porteuse (8).

**13.** Le système, conformément à la revendication 12, **est caractérisé en ce que** la structure porteuse (8) est conçue sous forme de tige rigide droite ou cintrée (9), qui est fixée au sol à la première extrémité (11) et qui s'éloigne du sol à la deuxième extrémité (10), et sur laquelle est fixée verticalement la ligne de détection (2), entre la deuxième extrémité (10) de la tige (9) et le sol, sur la zone (12) s'écartant horizontalement de la première extrémité (11) de la tige (9).

**14.** Le système, conformément à la revendication 12, **est caractérisé en ce que** la structure porteuse (8) est conçue sous forme de tige rigide droite ou cintrée (9), qui est fixée au sol à la première extrémité (11) et qui s'éloigne du sol à la deuxième extrémité (10), et sur laquelle est fixée verticalement la ligne de détection (2), entre la deuxième extrémité (10) de la tige (9) et le sol, sur la zone s'écartant horizontalement de la première extrémité (11) de la tige (9).

**FIG. 1**

# FIG. 2

a          b          c

# FIG. 3

# FIG. 4

# FIG. 5

## FIG. 6

## FIG. 7

## REFERENCES CITED IN THE DESCRIPTION

### Patent documents cited in the description

- JP 9269257 B
- JP 9218033 B
- JP 4048294 B
- JP 4140605 B
- US 2011219868 A
- JP 2003270358 B
- JP 52226274 B
- JP 63210733 B
- JP 2011053147 B
- JP 56124076 B
- US 2011073711 A1
- CH 547105 A5
- EP 0258135 A

### Non-patent literature cited in the description

- **NAVARRE, J.P.** Modele unidimensionenel d'evolution de la neige deposee. Modele perce-neige. *Meteorologie,* 1975, vol. 4 (3), 103-120
- **SINGH V.P.** Snow and Glacier Hydrology. Kluwer Academic Publisher Group, 2001, 764
- **NAPR. JUDSON, A. ; DOEKSEN, N.** Density of Freshly Fallen Snow in the Central Rocky Mountains. *Bulletin of the American Meteorological Society,* 2000
- **MASAHIRO KAJIKAWA ; NOBORU SATO ; YOSHIO ASUMA ; KATSUHIRO KIKUCHI.** Characteristics of fresh snow density and compressive viscosity in the Arctic region. *Journal of the Japanese Society of Snow and Ice,* 2006
- **MOTOVILOV, Y., G.** A model of snow cover formation and snowmelt processes. *Modelling Snowmelt-Induced Processes,* 1986
- **PERRY BARTELT ; MICHAEL LEHNING.** numerical model. *A physical SNOWPACK model for the Swiss avalanche warning,* 2002
- **BRAITHWAITE, R.J. ; OLESEN, O.B.** Response of the energy balance on the margin of the Greenland ice sheet to temperature changes. *J. Glaciol.,* 1990, vol. 36 (123), 217-221
- **HOCK, R.** Temperature index melt modelling in mountain areas. *J. Hydrol.,* 2003, vol. 282, 104-115